# NEUE EUROPÄISCHE PATENTSCHRIFT

(11) **EP 1 888 701 B2**
(45) Veröffentlichungstag und Bekanntmachung des Hinweises auf die Entscheidung über den Einspruch: **15.08.2012**
(45) Hinweis auf die Patenterteilung: 03.06.2009
(21) Anmeldenummer: 07723255.1
(22) Anmeldetag: 14.03.2007
(51) Int. Cl.: C09D 167/06, C09D 133/04, C09D 175/06, C08K 5/103

(54) **Verwendung eines Lacks zur Oberflächenbeschichtung von Formteilen**
Use of a lacquer to surface coat mouldings
Utilisation d'une peinture pour le revêtement de pièces moulées

(30) Priorität: 15.03.2006 DE 102006012274
(43) Veröffentlichungstag der Anmeldung: 20.02.2008
(73) Patentinhaber: Votteler Lackfabrik GmbH & Co. KG, 70825 Korntal-Münchingen (DE)
(72) Erfinder: VOTTELER, Dietmar, 70825 Korntal-Münchingen (DE); NOWOTNY, Wolfgang, 70825 Korntal-Münchingen (DE); SENTKO, Jörg, 70825 Korntal-Münchingen (DE)
(74) Vertreter: Mammel, Ulrike
(86) Internationale Anmeldenummer: PCT/EP2007/002249
(87) Internationale Veröffentlichungsnummer: WO 2007/104548

(56) Entgegenhaltungen:
- WO-A-2004/099221
- DE-A1- 2 104 958
- DE-A1- 2 211 899
- DE-A1- 2 426 602
- DE-A1- 2 939 584
- DE-A1- 4 007 519
- DE-A1- 10 027 670
- DE-A1- 10 260 067
- DE-A1-102004 031 759
- JP-A- 5 255 619
- JP-A- 5 306 378
- JP-A- 8 012 787
- US-A1- 2003 092 820
- US-A1- 2004 152 799
- US-A1- 2006 052 527
- Technische Information BASF AG, Ludwigshafen "LAROMER UP 35 D", EVP 006205d, November 2005

## Beschreibung

Die vorliegend Erfindung betrifft die Verwendung eines Lacks zur Oberflächenbeschichtung von Formteilen wie in Anspruch 1 und Unteransprüchen 2 bis 15 definiert.

Beschichtete Formteile, beispielsweise aus Holz, Holzwerkstoffen, Kunststoff, Faserverbundwerkstoffen (MDF, HDF, WPC), werden häufig zur Innenausstattung von Kraftfahrzeugen eingesetzt. Hierbei kommen insbesondere Holzformteile zum Einsatz, die als massive Teile oder als Furnierteile ausgebildet sein können.

In der Regel wird auf die Sichtseite des Holzformteils eine durchsichtige Lack- oder Harzschicht aufgebracht, um eine strapazierfähige und kratzbeständige, häufig glänzende Oberfläche zu erzeugen.

Die Anforderungen der Automobilindustrie an die Eigenschaften dieser Harz-/Lackschichten sind hoch:

Die VOC (volatile organic compound)-Emissionen des gehärteten Lackfilms müssen die entsprechenden Vorgaben der Automobilindustrie erfüllen, in Bezug auf die OEMs (Original Equiped Manufacturer) z. B. bei DaimlerChrysler weniger als 100 ppm VOC (90 °C), weniger als 80 ppm FOG (Nebel) (120 °C), Prüfmethode z. B. VDA 278 (Thermodesorptionsanalyse) oder entsprechende Vorgaben z. B. der Firmen BMW oder VW.

Die Oberflächenhärte (Mikrohärte, Martenshärte), die in Anlehnung an DIN EN ISO 14577 (Krafterhöhung 0,1 - 1000mN, t = 60 s) zu bestimmen ist, sollte zwischen 80 und 140 N/mm² liegen, da in diesem Bereich ein problemloses Schleifen, Polieren und Fräsen möglich ist.

Weiterhin müssen die Beschichtungen kratzbeständig sein, d.h. die entsprechenden Automobilnormen hinsichtlich der Kratzbeständigkeit erfüllen (Crockmeterprüfung oder Schmissbeständigkeitsprüfung). Bei DaimlerChrysler muss die Schmissbeständigkeit über 9 Newton liegen und bei der Crockmeterprüfung über 100 Doppelhüben.

Weitere Anforderungen an den ausgehärteten Lack sind der Vergilbungsgrad und die UV-Stabilität. Der Vergübungsgrad des ausgehärteten Lackfilms wird nach entsprechenden Prüfungen wie Temperaturwechsel, Wärmelagerung, Klimalagerung, die von der Automobilindustrie vorgegeben werden, anhand des Graumaßstabs nach ISO 105-A02 beurteilt, wobei der Graumaßstab wenigstens Stufe 4 entsprechen muss.

In Bezug auf die UV-Stabilität werden Lackmaterial und beschichtetes Substrat nach entsprechenden Belichtungen auf farbliche Veränderungen mit den von den Automobilhersteltern geforderten Vorgaben überprüft und anhand des Graumaßstabs nach ISO 105-A02 beurteilt, wobei der Graumaßstab wenigstens Stufe 4 entsprechen muss.

Soweit der Lack mittels In-mold-coating (IMC) aufgetragen wird, ist weiterhin die gute Entformbarkeit des beschichteten und gehärteten Materials von der Werkzeugoberfläche erforderlich, vorzugsweise ohne dass zusätzliche Trennmittel benötigt werden.

Ein weiteres wesentliche Kriterium ist die Transparenz des Lackfilms, d.h. der gehärtete Lackfilm sollte nach Härtung bzw, nach entsprechender Beanspruchung (Wärme, Belichtung, Klima) keine Trübungen aufweisen und keine sichtbaren Veränderungen gegenüber dem unbelasteten Referenzteil (Anlieferzustand) zeigen.

Weiterhin sollte das Gießmaterial einen möglichst geringen Schrumpf aufweisen, damit es zu keinerlei Bauteilverzug komme. Auch sollten sich im Falle der Kollision des Kraftfahrzeugs selbstverständlich keine Lackpartikel ablösen oder abplatzen, das heißt, kein Partikelflug auftreten.

In der Regel werden die Lacke auf die zu beschichtende Oberfläche aufgespritzt oder auflackiert. Auch ist bekannt, das Beschichtungsmaterial mittels Spritzguss aufzubringen.

Aus der US2004/0152799 A1 ist eine flexible strahlenhärtbare Formulierung bekannt, die zum Bedrucken oder Beschichten von spritzgegossenem Polycarbonat oder anderen thermoplastischen Kunststoffen dient. Die Harzkomponenten und Reaktivverdünner umfassende Formulierung wird auf das Kunststoffmaterial durch Multilayerdruck aufgebracht, d.h. nacheinander in mehreren dünnen Schichten. Diese Uv-härtbaren Formulierungen, die zum Bedrucken von Thermoplasten in dünnen Schichten dienen, weisen alle einen Anteil von UV-Initiatoren von wenigstens 4 Gew.% auf. Im Allgemeinen beträgt die Dicke solcher Schichten 5 bis 25 µm. Thermoplaste sind als zu beschichtende Materialien von Holz schon wegen der unterschiedlichen Oberflächenenerglen und Haftung, den großen Unterschieden im Wasseraufnahmevermögen, Schrumpf- und Quellverhalten und der Lösemittelbeständlgkeit völlig verschieden.

Aus der DE 100 27 670 A1 sind flüssige UV-härtbare Beschichtungsmaterialien mit Harzkomponenten, Reaktivverdünnern, 0,1 bis 10 Gew% Photoinitiatoren und einer Viskosität von etwa 600 mPa s bekannt. Diese Beschichtungsmaterialien werden durch Warmspritzen bei 35 °C - 80 °C In mehreren Schichten aufgetragen und anschließend UV-bestrahlt.

Auch aus der US 2003/0092820 A1 ist eine UV-härtbare Zusammensetzung mit Harzkomponenten, Reaktivverdünnern und Photoinitiatoren bekannt, die für dreidimensionales Inkjetprinting eingesetzt wird.

Aus der DE 40 07 519 A1 ist eine UV-härtbare farbgebende Harzmischung bekannt, die eine oder mehrere oligomere Harzkomponenten, Reaktivverdünner und einen Photoinitiator aufweist, mit der lackbeschichtete optische Glasfasern mit einer korrosionshemmenden wasserabstoßenden Farbsignierschicht versehen werden können.

Die WO 2004/99221A betrifft die Verwendung von speziellen Allyloxykohlenstoffderivaten als Reaktivverdünner in Beschichtungen und Farbformulierungen.

Aus der DE 10 2004 031 759 A1 ist eine strahlenhärtbare Zusammensetzung aus ungesättigten amorphen Polyestern und Reaktivverdünnern bekannt, die als Beschichtungsmaterial, auch für Holz, eingesetzt werden kann.

Beschichtungsmittel, die zur Herstellung von umformbaren Kratzbeschichtungen mit schmutzabweisender Wirkung dienen können, sind aus der DE 102 60 067 A1 bekannt. Das Beschichtungsmittel wird mit einem Spiralrakel auf Platten aufgetragen und dann jeweils mit zwei Minuten Verlaufszeit mit einem Quecksilberhochdruckstrahler unter Stickstoffatmosphäre ausgehärtet.

Weiterhin ist bekannt, Holzformteile mittels In-mald-Coating (IMC) zu beschichten. Hierzu wird das Holzformteil in den Hohlraum eines Werkzeugformteils eingelegt, wobei zwischen der zu beschichtenden Oberfläche des Holzformteils und der Wand des Werkzeugformtells ein Spaltraum ausgebildet ist, in den das flüssige Oberflächenbeschichtungsmaterial eingefüllt wird. Durch das Befüllen der Form wird ein Großteil der Luft oder gegebenenfalls anderer Gase oder Gasgemische aus dem Spaltraum verdrängt. Das in der Kavität befindliche Beschichtungsmaterial ist in der Form gegenüber entsprechendem Atmosphärenkontakt im Wesentlichen abgeschlossen. Anschließend wird das Oberflächenbeschichtungsmaterial innerhalb des Spaltraums ausgehärtet, wofür - wie in der DE 43 20 893 C1 und der DE 199 61 992 A1 beschrieben - UV-Strahlung eingesetzt werden kann. Hierzu ist das Formteil vorzugsweise zumindest im Bereich der zu beschichtenden Oberfläche UVstrahlungsdurchlässig ausgebildet. Die Höhe des Spaltraums, die der Dicke der erzeugten Lackschicht entspricht, beträgt im Allgemeinen 300 µm - 1.000 µm.

Beim In-mold-coating wird die gesamte Schicht in einem einzigen Arbeitsschritt aufgebracht.

UV-härtbare Beschichtungsmaterialen umfassen eine Harzkomponente und einen UV-Initiator. Durch die UV-Bestrahlung werden aus dem UV-Initiator Radikale gebildet, die eine Kettenreaktion auslösen, die anschließend auch dann aufrechterhalten wird, wenn keine Bestrahlung mehr erfolgt. Das mittels UV-Strahlung aktivierte Oberflächenbeschichtungsmaterial kann anschließend innerhalb weniger Minuten, beispielsweise weniger als 3 Minuten, wenigstens soweit in der Form härten, dass das mit der Oberflächenschicht versehene Innenausbauteil vom Formteil gelöst werden kann und handhabbar ist.

Das vollständige Aushärten kann in der Form oder auch außerhalb der Form, gegebenenfalls unter UV- oder Elektronen-Bestrahlung, erfolgen.

Aus dem Stand der Technik sind UV-härtbare Spritz- oder Gießlacke bekannt, die Viskositäten von weniger als 300 mPa s aufweisen. Damit mit diesen UV-härtbaren Lacken überhaupt eine Vernetzung erzielt werden kann, weisen die zum Einsatz kommenden UV-Lacke in Abhängigkeit von ihrer applizierten Schichtstärke einen UV-Initiatorgehalt von wenigstens 2 Gew.% auf.

Beim Einsatz dieser Formulierungen zur Beschichtung von Holzformteilen in den Werkzeugformen der IMC-Verfahren im Rahmen von internen Untersuchungen im Hause der Anmelderin wurden nach UV-Bestrahlung jedoch erhebliche Emissionen von VOC's beobachtet, teils neigten die Lacke zur Vergilbung, und auch die Durchhärtung der Lackschichten war ungenügend.

Die Aufgabe der vorliegenden Erfindung besteht darin, einen UV-härtbaren Lack zur Beschichtung von Holzformteilen mittels IMC-Verfahren bereitzustellen, der bei Bestrahlung mittels UV-Strahlung in einer IMC-Form, insbesondere bei einer Spaltbreite von 300 - 1.000 µm, Worzugsweise von 700 bis 900 µm, ausreichend durchhärtet und dessen VOC-Emission möglichst gering ist. Selbstverständlich sollte dieser Lack auch die anderen von der Automobilindustrie geforderten Anforderungen erfüllen, insbesondere transparent, rissbeständig und oberflächenkratzfest sein und nur eine sehr geringe Verglibungsneigung zeigen.

Erstaunlicherweise wurde festgestellt, dass eine ausreichende Durchhärtung der UV-härtbaren Harze in IMC-Formen dadurch erreicht werden kann, dass der Anteil an UV-Initiatoren in der Formulierung auf weniger als 1,5 Gew.% gesenkt wird, wobei die UV-Initiatoren aus der Gruppe der α-Hydroxyketone, Benzophenon, Phenylglyoxylate, Benzyldimethylketale, α-Aminoketone, Monoacylphosphine (MAPO), Bis-acylphosphine (BAPO) und Phosphinoxiden und deren Mischungen ausgewählt werden.

Der erfindungsgemäße UV-härtbare Lack weist somit wenigstens 40 Gew.% einer oder mehrerer Harzkomponenten zur Einstellung der geforderten Produkteigenschaften, bis zu 60 Gew.% einer oder mehrerer Reaktivverdünner und zwischen 0,3 und 1,5 Gew,% UV-Initiatoren auf.

Die Harzkomponenten können aus der Gruppe der ungesättigten Polyesterharze, der Acrylat- oder Metacrylatprepolymere bzw. -oligomere, der Polyurethan-Polyester-Prepolymere und deren Mischungen ausgewählt werden.

Die ungesättigten Polyesterharze sind vorzugsweise solche auf der Basis von Maleinsäure, Fumarsäure, Mesaconsäure, Citraconsaure, itaconsäure, o-Phthalsäure, Isophthalsäure, Terephthalsäure, Tetrahydrophthalsäure, Adipinsäure, Bernsteinsäure und/oder Sebacinsäure oder deren Anhydride.

Die ACrylat- oder Methacrylatprepolymere bzw. -oligomere werden vorzugsweise aus der Gruppe der UV-reaktiven und/oder elektronenstrahlhärtbaren Epoxyacrylate, Polyesteracrylate, Urethanacrylate, Polyolacrylate, Polyetheracrylate oder der gamischten Prepolymere dieser Verbindungsklassen ausgewählt.

Der bzw. die verwendeten Harztypen werden nach dem zu erfüllenden Anforderungaprofil des ausgehärteten Lackes ausgewählt.

Vorzugsweise beträgt der Anteil an der bzw. den Harzkomponenten in dem Lack zwischen 45 und 90 Gew.% und - in Abhängigkeit von der jeweiligen Harzkomponente und dem Reaktivverdünner - besonders bevorzugt zwischen 50 und 70 Gew.%.

Die Reaktivverdünner werden vorzugsweise aus der Gruppe der vinylischen Monomere wie z.B. Styrol oder Vinyltoluol, und der mono-, bi- und Polyfunktionellen Acrylate und Methacrylate ausgewählt, zu welcher beispielsweise die Verbindungen Mexandioldiacrylat, Hydroxymethylethylacrylat, Hydroxyethylacrylat, Hydroxypropylacrylat, Hydroxyethylmethacrylat, Hydroxypropylmethacrylat, Polyethylenglykoldiacrylat, Trimethylolpropantriacrylat, Trimethylolpropantrimethacrylat, Dipropylenglykoldiacrylat, Tripropylenglykoldiacrylat, 2-(Hydroxamethyl)-methacrylat, Butandioldimethacrylat, Triethylenglykoldimethacrylat und Isobomylmethacrylat gehören.

Die Auswahl der jeweiligen Reaktivverdünner erfolgt in Abhängigkeit von der/den jeweiligen Harzkomponente(n) und den geforderten Produkteigenschaften.

Weiterhin umfassen die erfindungsgemäßen Lacke UV-Initiatoren, die aus der Gruppe der α-Hydroxyketone, Benzophenon, Phenylglyoxylate, Benzyldimethylketale, α-Aminoketone, Monoacylphosphine (MAPO), Bis-acylphosphine (BAPO) und Phosphinoxiden und deren Mischungen ausgewählt werden. Als Mischungen von UV-Initiatoren haben sich insbesondere solche aus Hydroxyketonen und/oder MAPO und/oder BAPO bewährt.

Bevorzugt ist ein Anteil an UV-Initiatoren in dem Harz weniger als 1,2 Gew.% und insbesondere zwischen 0,5 und 1,0 Gew.%.

Der erfindungsgemäße Lack kann weiterhin übliche Lackadditive wie UV-Absorber, HALS (hindered amine light stabilisation), auf Nanopartikeln basierende Additive, Flammschutzmittel, oberflächenaktive Substanzen und interne Trennmittel umfassen, vorzugsweise in einem Anteil von 0 bis 3 Gew.%, wobei der Anteil Im Falle von Nanopartikeln und Flammschutzmitteln bis zu 30 Gew.% betragen kann.

Um mittels der IMC-Verfahren verarbeitet werden zu können, beträgt die Viskosität des erfindungsgemäßen Lacks bei 20 °C zwischen 500 und 2.500 mPa s (gemessen nach DIN 53019). Sofern das IMC-Verfahren bei erhöhter Temperatur des Lackes durchgeführt werden sollte, die dem Lacksystem selbstverständlich angepasst sein muss, sollte die Viskosität bei der Verarbeitungstemperatur zwischen 500 und 2.500 mPa s betragen. Vorzugsweise beträgt die Viskosität des Lackes bei 20 °C oder bei der Verarbeitungstemperatur in der IMC-Anlage zwischen 700 und 1.000 mPa s.

Die Erfindung wird nachfolgend anhand von Beispielrezepturen und Vergleichsversuchen näher beschreiben.

### 1 Beispielrezeptur

98,9 % polymerisierbare Substanz, wobei die polymerisierbare Substanz zu 69,0 Gew.% aus einem Gemisch von hochelastischen und zähelastischen ungesättigten Polyesterharzkörper und zu 31 Gew.% aus Styrol als Reaktivverdünner besteht 1,1% UV-Initiator vom Typ MAPO

### 2. Beispielrezeptur

99,11 % polymerisierbare Substanz, bestehend aus einem Gemisch von hochelastischen und zähelastischen ungesättigten Polyesterharzkörpern (69 %) und 31 % Reaktivverdünner (Styrol)
0,17 Gew.% UV-Initiator vom Typ MAPO
0,7Z Gew.% UV-Initiator vom TYP BAPO

### 3. Beispielrezeptur

99,4 % polymerisierbare Substanz, wobei die polymerisierbare Substanz aus 49,4 % Epoxyacrylat und 50,6 % Reaktivverdünnergemisch aus HDDA (Hexandioldiacrylat); HEMA (Hydroxyethlyenmethacrylat), Isobornylacrylat und Tripropylendiacrylat besteht
0,4 Gew.% UV-Initiator vom Typ MAPO
0,2 Gew.% UV-Initiator vom Typ Phenylglyoxylat

Als UV-Initiator vom Typ MAPO eignen sich z.B. Irgacure® TPO der Fa. Ciba Speciality Chemicals, als UV-Initiator vom Tyo BAPO eignet sich beispielsweise Irgacure® 819 der Fa. Ciba Speciality Chemicals und als UV-Initiator vom Typ Phenylglyoxylat eignet sich z.B. Darocur® MBF der Fa. Ciba Speciality Chemicals.

In Tabelle 1 sind die weiteren Beispielrezepturen und die Messergebnisse zusammengestellt, die nach der Beschichtung und UV-Aushärtung des Lackes in einer IMC-Anlage erhalten wurden.

Alle Vergleichsversuche A bis R wurden mit demselben UV-Harzgemisch durchgeführt, um die Oberflächenhärte, Emissionswerte und das Beschichtungsergebnis in Abhängigkeit von der Menge und der Art des Initiators beurteilen zu können.

Der UV-Initiator von Typ 1 war vom Typ MAPO, der von Typ 2 vom Typ BAPO und der von Typ 3 vom Typ Phosphinoxid,

Die Bewertung des Beschichtungsergebnisses erfolgte qualitativ unter Berücksichtigung der Kratzbeständigkeit, Optik, des Vergilbungsgrades, der Entformbarkeit und einer möglichen Blasenbildung.

Die Versuchsergebnisse belegen, dass bei einer in einer dicken Schicht von circa 800 µm in einem einzigen Beschichtungsvorgang in einer IMC-Anlage aufgebrachten Lackschicht hohe Emissionen, bei dem aus dem Stand der Technik bekannten hohen UV-Initiatorgehalt von 2,5 Gew.% und auch bei einem sehr geringen UV-Initiatorgehalt von 0,3 Gew.% erzielt werden und dass gute bis sehr gute Beschichtungsergebnisse und geringe VOC-Emissionen und eine gute Oberflächenhärte bei einem Initiatorgehalt zwischen 0,3 und 1,5 Gew.%, insbesondere zwischen 0,5 und 1 Gew.%, erhalten werden.

**Tabelle 1**

| **Vergleichende Beispiele** | | | | | | | | | |
|---|---|---|---|---|---|---|---|---|---|
| **Versuchsanordnung** | **A** | **B** | **C** | **D** | **E** | **F** | **G** | **H** | **I** |
| UP-Harzgemisch | 98,9 | 98,9 | 99,7 | 99,7 | 98,9 | 98,9 | 99,3 | 99,3 | 98,9 |
| UV Initiator 1 | | | | | 0,55 | 0,55 | 0,35 | 0,35 | 1,1 |
| UV Initiator 2 | 1,1 | | 0,3 | | 0,55 | | 0,35 | | |
| UV Initiator 3 | | 1,1 | | 0,3 | | 0,55 | | 0,35 | |
| Oberflächenhärte [N/mm¹] | 120,4 | 124,1 | 115,7 | 110,2 | 123,3 | 129,5 | 125,2 | 123,1 | 124,4 |
| TDSA VOC* | 813 | 296 | 948 | 3082 | 97 | 218 | 520 | 403 | 221 |
| Beschichtungsergebnis | - | +/- | + | + | +/- | +/- | + | +/- | - |
| Gesamtbewertung | - | + | - | - | + | +/- | - | +/- | - |

| **Versuchsanordnung** | **J** | **K** | **L** | **M** | **N** | **O** | **P** | **Q** | **R** |
|---|---|---|---|---|---|---|---|---|---|
| UP-Harzgemisch | 99,7 | 99,3 | 99,3 | 99,1 | 99,3 | 99,1 | 99,1 | 99,1 | 97,5 |
| UV Initiator 1 | 0,3 | | | 0,17 | 0,7 | 0,72 | 0,17 | 0,72 | 1,25 |
| UV Initiator 2 | | 0,7 | | 0,72 | | 0,17 | | | 1,25 |
| UV Initiator 3 | | | 0,7 | | | | 0,72 | 0,17 | |
| Oberflächenhärte [N/mm²] | 104,2 | 123,5 | 120,8 | 124,3 | 118,9 | 122,6 | 124 | 124,7 | 149,2 |
| TDSA VOC* [ppm] | 8846 | 202 | 287 | 82 | 331 | 194 | 259 | 154 | 16732 |
| Beschichtungsergebnis | + | - | - | + | - | - | - | - | - |
| Gesamtbewertung | - | - | - | + | - | - | - | - | - |

| | | | | | | | | | |
|---|---|---|---|---|---|---|---|---|---|
| *TDSA = Thermodesorptionsanalyse gemäß VDA 278 | | | | | | | | | |

## Patentansprüche

1. Verwendung eines Lacks zur Oberflächenbeschichtung von Formteilen in einer In-mold-coating-Anlage unter UV-Bestrahlung, welcher Lack wenigstens 40 Gew.% einer oder mehrerer Harzkomponenten zur Einstellung der geforderten Produkteigenschaften, bis zu 60 Gew.% einer oder mehrerer Reaktivverdünner und zwischen 0,3 und 1,5 Gew.% UV-Initiatoren umfasst, wobei die UV-Initiatoren aus der Gruppe der α-Hydroxyketone, Benzophenon, Phenylglyoxylate, Benzyldimethylketale, α-Aminoketone, Monoacylphosphine (MAPO), Bis-acylphosphine (BAPO) und Phosphinoxiden und deren Mischungen ausgewählt werden und die Viskosität des Lackes bei der Verarbeitungstemperatur in der IMC-Anlage zwischen 500 und 2.500 mPas (bestimmt nach DIN 53019) beträgt.

2. Verwendung eines Lacks nach Anspruch 1, **dadurch gekennzeichnet, dass** Harzkomponenten aus der Gruppe der ungesättigten Polyesterharze, der Acrylat- oder Metacrylatprepolymere bzw. - oligomere, der Polyurethan-Polyester-Prepolymere und deren Mischungen ausgewählt werden.

3. Verwendung eines Lacks nach einem der Ansprüche 1 oder 2, **dadurch gekennzeichnet, dass** die ungesättigten Polyesterharze solche auf der Basis von Maleinsäure, Fumarsäure, Mesaconsäure, Citraconsäure, Itaconsäure, o-Phthalsäure, Isophthalsäure, Terephthalsäure, Tetrahydrophthalsäure, Adipinsäure, Bernsteinsäure und/oder Sebacinsäure oder deren Anhydride sind.

4. Verwendung eines Lacks nach einem der Ansprüche 1 bis 3, **dadurch gekennzeichnet, dass** die Acrylat- oder Methacrylatprepolymere bzw. -oligomere aus der Gruppe der UV-reaktiven und/oder elektronenstrahlhärtbaren Epoxyacrylate, Polyesteracrylate, Urethanacrylate, Polyolacrylate, Polyetheracrylate oder der gewünschten Prepolymere dieser Verbindungsklassen ausgewählt werden.

5. Verwendung eines Lacks nach einem der Ansprüche 1 bis 4, **dadurch gekennzeichnet, dass** Reaktivverdünner aus der Gruppe der vinylischen Monomere und der mono-, bi- und polyfunktionellen Acrylate und Methacrylate ausgewählt werden.

6. Verwendung eines Lacks nach Anspruch 5, **dadurch gekennzeichnet, dass** die Reaktivverdünner Styrol, Vinyltoloul, Hexandioldiacrylat, Hydroxymethylethylacrylat, Hydroxyethylacrylat, Hydroxypropylacrylat, Hydroxyethylenmethacrylat, Hydroxypropylmethacrylat, Polyethylenglykoldiacrylat, Trimethylolpropantriacrylat, Trimethylolpropantrimethacrylat, Dipropylenglykoldiacrylat, Tripropylenglykoldiacrylat, 2-(Hydroxamethyl)-methacrylat, Butandioldimethacrylat, Triethylenglykoldimethacrylat und/oder Isobornylmethacrylat sind.

7. Verwendung eines Lacks nach einem der Ansprüche 1 bis 6, **dadurch gekennzeichnet, dass** der Anteil an UV-Initiatoren weniger als 1,2 Gew.% beträgt.

8. Verwendung eines Lacks nach Anspruch 7, **dadurch gekennzeichnet, dass** der Anteil an UV-Initiatoren zwischen 0,5 und 1,0 Gew.% beträgt.

9. Verwendung eines Lacks nach einem der Ansprüche 1 bis 8, **dadurch gekennzeichnet, dass** nach UV-Bestrahlung der auf das Formteil in der Form aufgebrachten Lackschicht und Aushärtung die Oberflächenhärte wenigstens 80 N/mm² (Krafterhöhung 0,1 - 1.000 mN, t = 60s) beträgt.

10. Verwendung eines Lacks nach einem der Ansprüche 1 bis 9, **dadurch gekennzeichnet, dass** nach UV-Bestrahlung der auf das Formteil in der Form aufgebrachten Lackschicht und Aushärtung die Schmissbeständigkeit über 9 N liegt und/oder bei der Crockmeterprüfung über 100 Doppelhübe erzielt werden.

11. Verwendung eines Lacks nach einem der Ansprüche 1 bis 10, **dadurch gekennzeichnet, dass** die VOC (volatile organic compounds)-Emission des ausgehärteten Lackfilms weniger als 100 ppm VOC (bei 90 °C) und/oder weniger als 80 ppm FOG (Nebel) (bei 120 °C) beträgt.

12. Verwendung eines Lacks nach Anspruch 11 zur Herstellung einer Beschichtung in einem einzigen Arbeitsschritt mit einer Schichtdicke zwischen 300 und 1.000 µm.

13. Verwendung eines Lacks nach einem der Ansprüche 1 bis 12, **dadurch gekennzeichnet, dass** das Formteil aus Holz, einem Holzwerkstoff, Kunststoff oder einem Faserverbundwerkstoff ist.

14. Verwendung eines Lacks nach einem der Ansprüche 1 bis 13 in der Automobilindustrie.

## Claims

1. The use of a varnish for the surface coating of shaped articles in an in-mold-coating (IMC)-unit with UV irradiation, which varnish comprises at least 40% by weight of one or more resin components for establishing the required product properties, up to 60% by weight of one or more reactive diluents and from 0.3 to 1.5% by weight of UV initiators, whereby the UV initiators are selected from the group consisting of the α-hydroxyketones, benzophenone, phenyl glyoxylates, benzyl dimethyl ketals, α-aminoketones, monoacylphosphines (MAPO), bisacylphosphines (BAPO) and phosphine oxides and mixtures thereof and the viscosity of the varnish at the processing temperature in the IMC-unit being from 500 to 2500 mPa.s (determined according to DIN 53019).

2. The use of a varnish as claimed in claim 1, **characterized in that** resin components are selected from the group consisting of the unsaturated polyester resins, the acrylate or methacrylate prepolymers or oligomers, the polyurethane-polyester prepolymers and mixtures thereof.

3. The use of a varnish as claimed in either of claims 1 and 2, **characterized in that** the unsaturated polyester resins are those based on maleic acid, fumaric acid, mesaconic acid, citraconic acid, itaconic acid, o-phthalic acid, isophthalic acid, terephthalic acid, tetrahydrophthalic acid, adipic acid, succinic acid and/or sebacic acid or the anhydrides thereof.

4. The use of a varnish as claimed in any of claims 1 to 3, **characterized in that** the acrylate or methacrylate prepolymers or oligomers are selected from the group consisting of the UV-reactive and/or electron beam-curable epoxy acrylates, polyester acrylates, urethane acrylates, polyol acrylates, polyether acrylates or the desired prepolymers of these classes of compounds.

5. The use of a varnish as claimed in any of claims 1 to 4, **characterized in that** reactive diluents are selected from the group consisting of the vinylic monomers and the mono-, bi- and polyfunctional acrylates and methacrylates.

6. The use of a varnish according to claim 5, **characterized in that** reactive diluents are styrene, vinyltoluene, hexanediol diacrylate, hydroxymethylethyl acrylate, hydroxyethyl acrylate, hydroxypropyl acrylate, hydroxyethylene methacrylate, hydroxypropyl methacrylate, polyethylene glycol diacrylate, trimethylolpropane triacrylate, trimethylolpropane trimethacrylate, dipropylene glycol diacrylate, tripropylene glycol diacrylate, 2-(hydroxymethyl) methacrylate, butanediol dimethacrylate, triethylene glycol dimethacrylate and/or isobornyl methacrylate.

7. The use of a varnish as claimed in any of claims 1 to 6, **characterized in that** the proportion of UV initiators is less than 1.2% by weight.

8. The use of a varnish according to claim 7, **characterized in that** the portion of UV initiators is from 0.5 to 1.0% by weight.

9. The use of a varnish as claimed in any of claims 1 to 8, **characterized in that**, after UV irradiation of the varnish layer applied to the shaped article in the mold and curing, the surface hardness is at least 80 N/mm² (force increase 0.1-1000 mN, t = 60 s).

10. The use of a varnish as claimed in any of claims 1 to 9, **characterized in that**, after UV irradiation of the varnish layer applied to the shaped article in the mold and curing, the mar resistance is above 9 N and/or more than 100 double strokes are achieved in the crockmeter test.

11. The use of a varnish as claimed in any of claims 1 to 10, **characterized in that** the VOC (volatile organic compounds) emission of the cured varnish film is less than 100 ppm VOC (at 90°C) and/or less than 80 ppm FOG (fog)(at 120°C).

12. The use of a varnish as claimed in claim 11 for the production of a coating in a single operation with a layer thickness of from 300 to 1000 µm.

13. The use of a varnish as claimed in any of the claims 1 to 12, **characterized in that** the shaped article is made of wood, wood-base materials, plastic or fiber composite materials.

14. The use of a varnish as claimed in any of the claims 1 to 13 for the automotive industry.

## Revendications

1. Utilisation d'un vernis pour le revêtement superficiel de pièces moulées dans une unité *In-mold-coating* (IMC, enduction en moule) sous irradiation UV, ledit vernis comprenant au moins 40 % en poids d'un ou plusieurs composants de type résine pour l'ajustement des propriétés requises du produit, jusqu'à 60 % en poids d'un ou plusieurs diluants réactifs et entre 0,3 et 1,5 % en poids d'accélérateurs UV, les accélérateurs UV étant choisis dans le groupe constitué par les α-hydroxycétones, la benzophénone, les glyoxylates de phényle, les benzyldiméthylcétals, les α-aminocétones, les monoacylphosphines (MAPO), les bis-acylphosphines (BAPO) et les oxydes de phosphines et des mélanges de ceux-ci, et la viscosité du vernis à la température de mise en oeuvre dans l'unité IMC étant comprise entre 500 et 2 500 mPa.s (déterminée selon DIN 53019).

2. Utilisation d'un vernis selon la revendication 1, **caractérisée en ce que** les composants de type résine sont choisis dans le groupe des résines polyester insaturées, des prépolymères ou oligomères d'acrylate ou de méthacrylate, des prépolymères polyuréthanne-polyester et de mélanges de ceux-ci.

3. Utilisation d'un vernis selon la revendication 1 ou 2, **caractérisée en ce que** les résines polyester insaturées sont celles à base d'acide maléique, d'acide fumarique, d'acide mésaconique, d'acide citraconique, d'acide itaconique, d'acide o-phtalique, d'acide isophtalique, d'acide téréphtalique, d'acide tétrahydrophtalique, d'acide adipique, d'acide succinique et/ou d'acide sébacique ou de leurs anhydrides.

4. Utilisation d'un vernis selon l'une quelconque des revendications 1 à 3, **caractérisée en ce que** les prépolymères ou oligomères d'acrylate ou de méthacrylate sont choisis dans le groupe des époxyacrylates, polyesteracrylates, uréthanne-acrylates, polyolacrylates, polyétheracrylates, réactifs aux UV et/ou durcissables par faisceau d'électrons, ou des prépolymères désirés de ces classes de composés.

5. Utilisation d'un vernis selon l'une quelconque des revendications 1 à 4, **caractérisée en ce que** les diluants réactifs sont choisis dans le groupe des monomères vinyliques et des acrylates et méthacrylates mono-, bi- et polyfonctionnels.

6. Utilisation d'un vernis selon la revendication 5, **caractérisée en ce que** les diluants réactifs sont le styrène, le vinyltoluène, le diacrylate d'hexanediol, l'acrylate d'hydroxyméthyléthyle, l'acrylate d'hydroxyéthyle, l'acrylate d'hydroxypropyle, le méthacrylate d'hydroxyéthylène, le méthacrylate d'hydroxypropyle, le diacrylate de polyéthylèneglycol, le triacrylate de triméthylolpropane, le triméthacrylate de triméthylolpropane, le diacrylate de dipropylèneglycol, le diacrylate de tripropylèneglycol, le méthacrylate de 2-(hydroxyméthyle), le diméthacrylate de butanediol, le diméthacrylate de triéthylèneglycol et/ou le méthacrylate d'isobornyle.

7. Utilisation d'un vernis selon l'une quelconque des revendications 1 à 6, **caractérisée en ce que** la teneur en amorceurs UV est inférieure à 1,2 % en poids.

8. Utilisation d'un vernis selon la revendication 7, **caractérisée en ce que** la teneur en amorceurs UV est comprise entre 0,5 et 1,0 % en poids.

9. Utilisation d'un vernis selon l'une quelconque des revendications 1 à 8, **caractérisée en ce qu'**après irradiation UV de la couche de vernis appliquée sur la pièce moulée dans le moule et durcissement, la dureté superficielle est d'au moins 80 N/mm² (augmentation de force 0,1 - 1 000 mN, t = 60 s).

10. Utilisation d'un vernis selon l'une quelconque des revendications 1 à 9, **caractérisée en ce qu'**après irradiation UV de la couche de vernis appliquée sur la pièce moulée dans le moule et durcissement, la résistance à l'endommagement est supérieure à 9 N et/ou plus de 100 va-et-vient sont atteints dans l'essai sur Crockmeter.

11. Utilisation d'un vernis selon l'une quelconque des revendications 1 à 10, **caractérisée en ce que** l'émission de VOC [*volatile organic compounds* (composés organiques volatils)] du feuil de vernis durci est inférieure à 100 ppm de VOC (à 90 °C) et/ou inférieure à 80 ppm de FOG (brouillard) (à 120 °C).

12. Utilisation d'un vernis selon la revendication 11, pour la production d'un revêtement en une seule opération, avec une épaisseur de couche comprise entre 300 et 1 000 µm.

13. Utilisation d'un vernis selon l'une quelconque des revendications 1 à 12, **caractérisée en ce que** la pièce moulée est en bois, en un matériau dérivé du bois, en une matière plastique ou en un matériau renforcé avec des fibres.

14. Utilisation d'un vernis selon l'une quelconque des revendications 1 à 13, dans l'industrie de l'automobile.
